# EUROPEAN PATENT SPECIFICATION

(11) **EP 3 039 172 B1**
(45) Date of publication and mention of the grant of the patent: **04.09.2019**
(21) Application number: 14854227.7
(22) Date of filing: 28.07.2014
(51) Int. Cl.: C25B 11/04, C25B 1/04, C25B 5/00, C25B 9/18, H01M 6/04, H01M 16/00, H01M 4/46, H01M 4/38

(54) **ELECTRIC POWER GENERATOR USING POTABLE WATER, WITH OXYGEN AND HYDROGEN RELEASE**
GENERATOR ZUR STROMERZEUGUNG MITTELS TRINKWASSER MIT SAUERSTOFF- UND WASSERSTOFFFREISETZUNG
GÉNÉRATEUR D'ÉNERGIE ÉLECTRIQUE UTILISANT DE L'EAU POTABLE, AVEC DÉGAGEMENT D'OXYGÈNE ET D'HYDROGÈNE

(30) Priority: 26.07.2013 RO 201300029
(43) Date of publication of application: 06.07.2016
(73) Proprietor: Ionescu, Iuliu, 110260 County Arges (RO); Tordai, Alexandru, Brasov County (RO)
(72) Inventor: Ionescu, Iuliu, County Arges (RO); Tordai, Alexandru, Brasov County (RO)
(74) Representative: Thum, Bernhard
(86) International application number: PCT/RO2014/000021
(87) International publication number: WO 2015/057093

(56) References cited:
- GB-A- 1 447 614
- JP-A- 2000 199 090
- RU-A- 2005 116 437
- US-A- 4 822 469
- US-A1- 2007 251 834

## Description

The invention consists of an electricity generator with drinkable water comprising an electrical insulator container split into several compartments air-sealed between them, each compartment being filled with drinkable water and having inside at least one pair of concentric electrodes made from different metals or metal alloys, one electrode of said at least one pair being more electronegative than the other, the electrodes being connected in series or parallel, wherein at a container's exit point an electrolytic condenser and an impulse generator or an oscillator are connected at the exit of which a doubler or a voltage multiplier is connected.

GB1447614 describes a motor vehicle driven by a hydrogen-burning propulsion unit that includes an electrolytic cell for producing the H₂ required by the unit by the dissociation of water. The cell has either pure Al plate electrodes, or the anode is a cone or rod disposed in a conical recess in the cathode, in this case the electrodes being of compressed Zn/Cu and compressed Fe. The cell has a plastics or glass casing, its electrolyte is salt-free water to which a small quantity of sulphuric acid or caustic soda has been added, and is powered by an electrical storage battery.

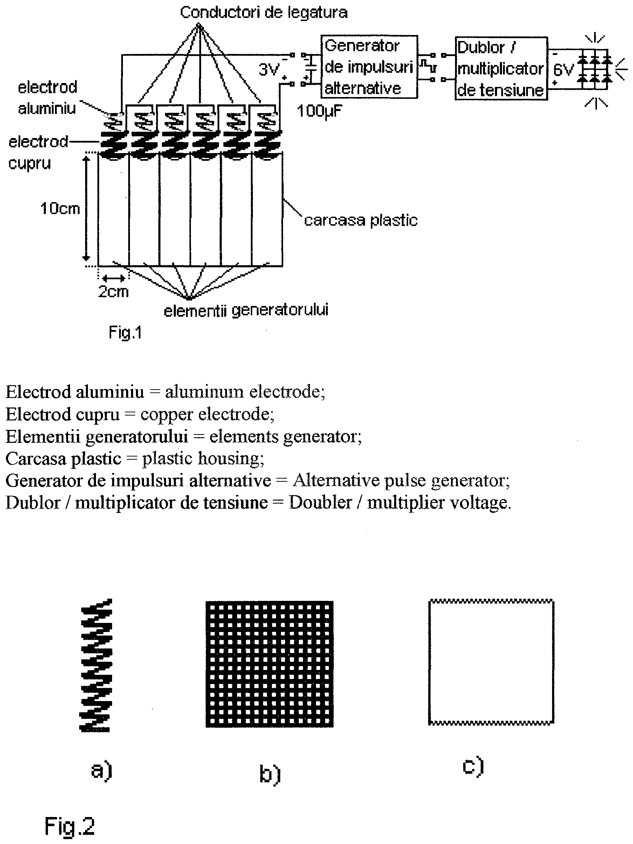

For exemplification, I employed six of the generator's elements- plastic pipes or other insulator (fig.1) each having in the interior a pair of spiral electrodes, one made of copper and one made of aluminium. Some plastic splitters or other insulator should be between the electrodes so as not to touch each other. The elements are serially connected by interconnecting conductors, like batteries. The elements 'casing can be made of an insulating material or it may even be an electrode.

A potential difference is created in every element which is of about 0, 5 V direct current between the aluminium and copper electrodes. If materials with a higher electronegativity difference are to be used, then the potential will be higher. By connecting in series six elements, a potential difference of 3 V direct current is created of a very low intensity- measured in microamperes.

The novelty lies in that by using electrodes particular physical structures, made of different materials and adding a condenser, an alternative impulse generator and a doubler or a voltage multiplier useful, stronger power is achieved.

The electrodes may be made out of wire, rods or plates with the diameter or thickness of 3 mm. Other smaller or larger sizes may be chosen as well, depending on their scope. In order to be effective, the electrodes should be spiraled, either from wire mesh from the material of said electrode, or from jagged (zig-zag) plate, (fig.2a, b, c). Such an electrode structure enhances the generator's power by a few times.

The distance between the cathode and anode can be chosen between 1 and 5 mm placing plastic splitters between them or other insulator.

The electrodes, be they made out of spiral wire, wire mesh or corrugated sheet in zig-zag can be concentric even on several layers (the cathode inside the anode or vice-versa):

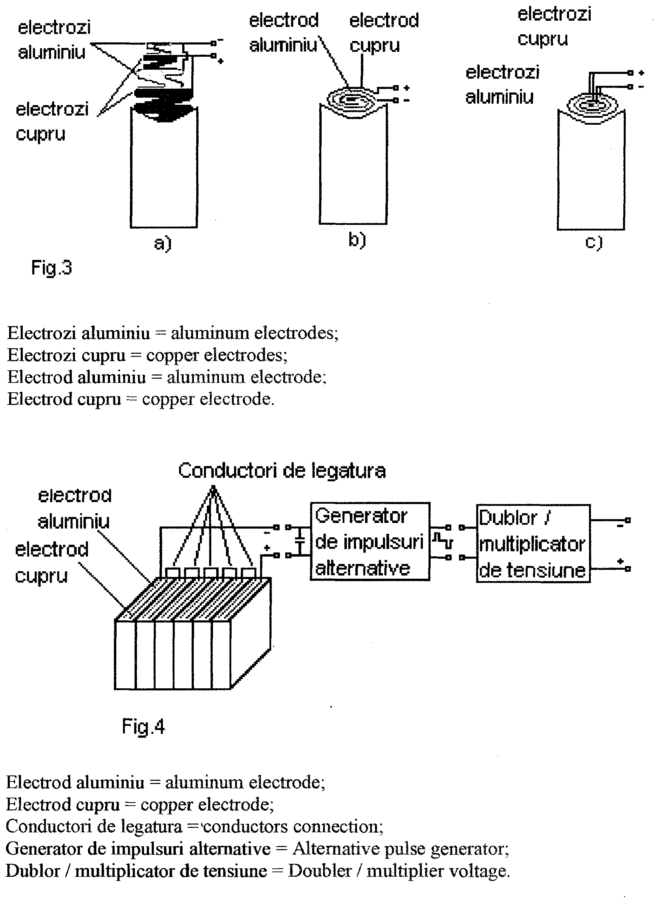

Fig.3a- concentric spiral electrodes on several layers.
Fig.3b- electrodes made of jagged plate or wire mesh shaped like a roll on several layers.
Fig.3c- jagged plate or wire mesh electrodes in concentric circles on several layers. Even the elements' casing can constitute one of the electrodes, either the anode, or the cathode.

The elements can be as many as desired, connected in series or parallel depending on the energy we want.

To become useful, this energy should be amplified both in intensity, and in terms of voltage. Thus, I added an electronic assemblage which solves this problem, so that from one generator with six elements formed of 10 cm long and 2 cm diameter pipes can light up six LEDs with a handmade prototype.

Of course, in a factory production, the output can be much better as compared with the handmade prototype.

The electronic circuit consists of an electrolytic condenser connected to the generator's terminals, an alternative impulse generator and a doubler or a voltage multiplier.

The condenser's role is to enhance the current's intensity between the impulses. The alternative impulse generator has a stimulating effect over the energy output in the generator, also enhancing its intensity. The voltage doubler (or the multiplier) has the function of enhancing the voltage. Such a combination increases the generator's power by a few times.

In this process occurs concomitantly water electrolysis as well, gas bubbles appearing in the two electrodes. As we know, oxygen discharges to the anode, in the case in point to the aluminium electrode, and hydrogen to the cathode, in our case the copper electrode.

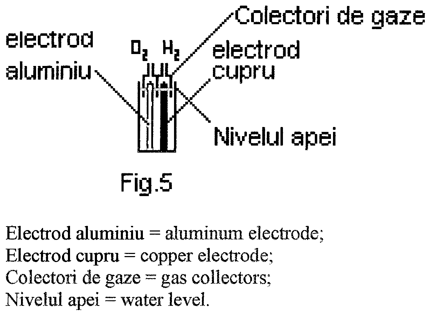

For a larger generator, electrodes shaped like jagged plate sheets or wire mesh can be used (fig.4). The gases yielded can be collected by using collectors (fig. 5 -side view) and used to produce heat energy or in industry, agriculture, medicine etc.

Water consumption is low. It requires no water change, only addition. The approximate quantity of water to be added is of 10% per month, should it be used at maximum capacity.

It is possible that within a few years, the anode (the aluminium electrode) may deteriorate, thus requiring replacement. This is dependent upon the water and electrode's composition. This is only for cases where the generator is used permanently at maximum capacity. If it is not used permanently or if it is not used at maximum capacity, the anode's electrodes can last longer. In the breaks between the generator's usage ranges, it doesn't deteriorate, being able to resume its use even after tens or even hundreds of years.

For example, a normal flash light used rarely may last without problems for tens or even hundreds of years.

The potential deposits on the cathode are insignificant and do not interfere with the process' carry out, since the water is drinkable.

The electrodes can be made of other materials having higher electronegativity difference between the cathode and anode. They can be also made of alloys, treated metals or metal plating, semiconductors, thus extending the electrodes' life and at the same time enhancing the generator's power.

Certain substances are added in water so as to extend the electrodes' life and/or substances like "antifreeze" solutions, so that the generator may function below 0 degrees Celsius as well.

It can be used in any branch of the industry, agriculture, medicine, household appliances etc.

It can load accumulators which will generate higher power over shorter periods of time.

As opposed to other energy sources, it has the following advantages:
1. It doesn't depend on the sun, day or night time.
2. It doesn't depend on the wind.
3.It doesn't pollute the atmosphere.
4. It produces a constant quantity of energy.
5. It can be carried without being demounted, as compared with the solar power-plants or wind -power stations.
6. After being manufactured, it can be easily and practically placed and it produces energy immediately.
7. It does not deteriorate over a period of inactivity, unlike accumulators.
8. It can be buried underground (even a water reservoir) which doesn't take up much space and does not cloud the ground like a solar panel. Thus, a temperature of over 0 degrees Celsius is ensured even in the winter without water addition.
9. It doesn't contain acids or salts; consequently, it is not dangerous. It can be used also in agriculture with no problems.
10. It can be used even in apartments, which cannot be done with the solar power-plants or wind -power stations. A volume of one cubic meter installed in a closet, hall way etc. might be sufficient.
11. Depending on the generator's volume and on needs, it could ensure on its own the energy required.
12. It can be used to compensate for the temporary lack of energy when other generators are not enough (solar, wind etc.).
13. The other sources can be supplemented permanently when more energy is required, with one safe, reliable source which does not lead to unpredictable difficulties.
14. It does not have a high cost, having regard to the fact that only once in several years (and upon extensive use) will require only the change of the anode's electrodes.
15. It can be used only in the areas where no electrical network can be implemented, nor exploit the solar or wind energy.
16. It is useful in difficult of access areas where constant energy is needed over more years and the accumulators' frequent change is hard to do, such as underground, under water and even in cosmos.

## Claims

1. An electricity generator with drinkable water comprising an electrical insulator container split into several compartments air-sealed between them, each compartment being filled with drinkable water and having inside at least one pair of concentric electrodes made from different metals or metal alloys, one electrode of said at least one pair being more electronegative than the other, the electrodes being connected in series or parallel, wherein at a container's exit point an electrolytic condenser and an impulse generator or an oscillator are connected, at the exit of which a doubler or a voltage multiplier is connected.

2. The generator according to claim 1, **characterised in that** it comprises six pairs of metallic electrodes, each pair having an electrode made from Al and an electrode made from Cu.

3. The generator according to claim 1, **characterised in that** the at least one pair of metallic electrodes is composed from electrodes made from jagged plate or wire mesh shaped like a roll or concentric circles, on several layers.

4. The generator according to claim 1, **characterised in that** the water inside each sealed compartment has no added salts, acids or organic substances.

5. The generator according to claim 1, **characterised in that** the water inside each sealed compartment contains antifreeze-like solutions.

## Patentansprüche

1. Elektrischer Generator mit Trinkwasser, umfassend einen Elektrischer-Isolator-Behälter, der in mehrere Kammern geteilt ist, die voneinander luftverschlossen sind, wobei jede Kammer mit Trankwasser gefüllt ist und im Inneren zumindest ein Paar konzentrischer Elektroden aufweist, die aus unterschiedlichen Metallen oder Metalllegierungen gefertigt sind, wobei eine Elektrode des zumindest einen Paars elektronegativer ist als die andere, wobei die Elektroden in Serie oder parallel verbunden sind, wobei an einem Ausgangspunkt des Behälters ein elektrolytischer Kondensator und ein Impulsgenerator oder ein Oszillator angebunden sind, an dessen Ausgang ein Verdoppler oder ein Spannungsvervielfacher angebunden ist.

2. Generator gemäß Anspruch 1, **dadurch gekennzeichnet, dass** er sechs Paare metallischer Elektroden umfasst, wobei jedes Paar eine Elektrode, die aus Aluminium gefertigt ist, und eine Elektrode, die aus Kupfer gefertigt ist, umfasst.

3. Generator gemäß Anspruch 1, **dadurch gekennzeichnet, dass** das zumindest eine Paar von metallischen Elektroden aus Elektroden zusammengesetzt ist, die in mehreren Lagen aus gezackten Platten oder aus Drahtgeflecht gefertigt sind, die wie eine Rolle oder wie konzentrische Kreise geformt sind.

4. Generator gemäß Anspruch 1, **dadurch gekennzeichnet, dass** das Wasser im Inneren jeder abgedichteten Kammer keine zugesetzten Salze, Säuren oder organischen Substanzen aufweist.

5. Generator gemäß Anspruch 1, **dadurch gekennzeichnet, dass** das Wasser im Inneren jeder abgedichteten Kammer frostschutzartige Lösungen enthält.

## Revendications

1. Générateur électrique avec de l'eau potable comprenant un conteneur isolant électrique divisé en plusieurs compartiments scellés à l'air entre eux, chaque compartiment étant rempli d'eau potable et comportant à l'intérieur au moins une paire d'électrodes concentriques constituées de différents métaux ou alliages métalliques, une électrode de ladite au moins une paire étant plus électronégative que l'autre, les électrodes étant connectées en série ou en parallèle, dans lequel un condensateur électrolytique et un générateur d'impulsions ou un oscillateur sont connectés au niveau d'un point de sortie du conteneur, à la sortie desquels un doubleur ou un multiplicateur de tension est connecté.

2. Générateur selon la revendication 1, **caractérisé en ce qu'**il comprend six paires d'électrodes métalliques, chaque paire comportant une électrode en Al et une électrode en Cu.

3. Générateur selon la revendication 1, **caractérisé en ce que** l'au moins une paire d'électrodes métalliques est composée d'électrodes constituées de plaque dentelée ou de treillis métallique en forme de rouleau ou de cercles concentriques, sur plusieurs couches.

4. Générateur selon la revendication 1, **caractérisé en ce que** l'eau à l'intérieur de chaque compartiment scellé ne contient pas de sels, d'acides ou de substances organiques ajoutés.

5. Générateur selon la revendication 1, **caractérisé en ce que** l'eau à l'intérieur de chaque compartiment scellé contient des solutions analogues à de l'antigel.
